# EUROPEAN PATENT APPLICATION

(11) **EP 2 259 216 A1**
(43) Date of publication of application: **08.12.2010**
(21) Application number: 10162930.1
(22) Date of filing: 17.05.2010
(51) Int. Cl.: G06Q 10/00

(54) **System and method for managing waste oil**

(30) Priority: 05.06.2009 TW 098118668; 01.04.2010 TW 099110072
(71) Applicant: Giten Energy Manufacturing Company Limited, Kachsiung City 80681, Tapei (TW)
(72) Inventor: Hsiu-An, Lin, Keelung City 20044 (TW)
(74) Representative: Lang, Christian

(57) **Abstract**

The present invention provides a system for managing waste oil, which comprises at least one container wherein each container has an identifying element disposed thereon for recording information with respect to the waste oil provider, container, and quality of the waste oil. By means of the system, the present invention further provides a method for managing and trading the waste oil, which refers to a business method for implementing transaction such as sale of waste oil or exchange between waste oil and daily necessaries according to the information of the identifying element whereby the business center can control the logistics, cash flow and information flow easily and efficiently so that the waste oil provider can have service of transaction easily.

## Description

### FIELD OF THE INVENTION

The present invention relates to a management system and method, and more particularly, to a system and method for managing waste oil.

### BACKGROUND OF THE INVENTION

While energy demand is growing as societies worldwide are becoming more and more industrialized, fossil fuel reserves are being depleted, that is, in about 50 years we will have depleted most of our fossil fuel reserves. If the current consumption rate remains the same, proven oil reserves will last about 40 years which causes the price of crude oil to get higher and higher every year. Historically, crude oil had reached a record peak of 140 U.S. dollars per barrel at June 2008. Scientists are researching and developing alternative sources of energy in the event of this crisis, but unfortunately those alternative energies being developed are much more expensive than producing fossil fuels, such as crude oil, and thus they only supply a small percentage of the world's energy usage. However, with the rising of oil price and the improvement in the technology of alternative energy source production, the cost between two are narrowing day by day so that all kinds of alternative energy sources including hydroelectricity, wind energy and geothermal energy, and so on, are becoming more and more popular.

It is noted that any waste oil, no matter it is a mineral oil or a plant animal oil, can be used as fuel for engines, burners or boilers after being refined. Therefore, the refined waste oil can be considered to be a typical green energy which can contribute greatly not only in energy saving and reducing CO₂ emission for sustainable economic development, but also in urban air pollution control and waste recycling.

In the waste oil recycling process currently adopted by most waste oil recyclers, all kinds of different recycled waste oils, no matter it is good or bad, are dumped into one large storage tank without being clustered and registered into a database for information management. It is almost certain that those different waste oils are going to mix and react to each other, and thus, there will be many polymers being generated and settled at the bottom of the storage tank as greasy filth. Thus, it is not cost efficient for refining such waste oils that are mixed in a tank with a thick layer of grease at the bottom thereof. In addition, as the purchase price of a tank of waste oil is determined according to its weight in most conventional waste oil recyclers, there will be many shortcomings being resulted as following:
(1) It is usual and preferred to use weight stations when there is a huge amount of waste oil to be weighted. However, since the majority of waste oil are coming from the sources like hotels, restaurants, lunch box sellers and street food venders, etc., which are referred as waste oil providers hereinafter, it is almost all the time that there is no weight station near such waste oil providers. Therefore, it is not convenient for weighting and recycling waste oils.
(2) Except for the weight, the quality as well as the character of the recycled waste oil itself should also be an important factor affecting the purchase price thereof, but conventionally the purchase price is determined only according to its weight. Thus, it is often happened in waste oil recyclers that the purchased waste oil contains too much water, or is either high in acid value or in iodine value that may cause difficulty to the refinement process and thus cause the refining cost to increase.

Moreover, without proper waste oil management, those businesses such as fry-food restaurants which make billions of gallons of waste cooking oil every year are tended to fry as many as possible in one pot of cooking oil for cost saving, that often cause the resulting waste cooking oil high in acid value. For instance, if a kind of edible soybean oil is used as the frying oil in a restaurant, its acid value may reach a value higher than 2 after being used for frying foods. Consequently, not only the quality of the foods being fried by such acid oil is adversely affected, but also the health of the customers easting the fried foods is in danger.

Therefore, it is in need of a waste oil management system and method for solving the aforesaid shortcomings.

### SUMMARY OF THE INVENTION

The primary object of the present invention is to provide a waste oil management system and method, capable of integrating waste oil information relating to logistic, cash flow and information flow for enabling not only those waste oil provides to complete their businesses relating to the trading and exchanging of waste oil without any difficulty, but also enabling waste oil recyclers to handle waste oil logistic, cash flow and the information flow, wherein the waste oil logistic includes the flowing of waste oil from the waste oil providers to their corresponding local distributors and finally to the refinery factory, and the flowing of all type of fresh oils, such as plant animal oils, fossil oils, mineral oils, bio-diesel, and bio-gasoline, etc., from refinery to local distributors and finally to the waste oil providers; and the cash flow relates to information for implementing transactions such as sale of waste oil or exchange between waste oil and daily necessaries; and the information flow relates to information for managing the factories, the refineries, the local distributors, the banks, the waste oil providers, the waste oil recyclers, and all the other businesses relating to the waste oil recycling process.

Another object of the present invention is to provide a waste oil management system and method, capable of utilizing radio frequency identification (RFID) tags attached on waste oil containers to issue signals actively through a communication network composed of wireless communication services and global positioning systems so as to enabling waste oil recyclers to have waste oil information relating to weight, volume, water content, acid value, iodine value, etc. in a dynamic and real-time manner, by that the operation centers of the waste oil recyclers are able to perform tasks relating to elastic scheduling in waste oil recycle, optimizing production in waste oil refining and maximizing cost reduction after receiving those waste oil information.

Moreover, it is another object of the present invention is to provide a waste oil management system and method, in which each container used in the waste oil management system and method is configured with a detector and a display unit in a manner that the detector is designed to perform various character tests upon the waste oil stored in the container so as to detect characters of the waste oil including weight, volume, water content, acid value, iodine value, and peroxide value, etc., and the display unit is used for displaying those detected information transmitted from the detector while registering the detected information in a wireless chip, or in a form of bar code, and/or transmitting the same to a specific device, such as a cellular phone, a personal digital assistant (PDA), a notebook computer or a desktop computer, so as to be used as pricing basis in waste oil recycling.

It is further another object of the present invention is to provide a waste oil management method, designed for enabling users to obtain their required fresh oil products in a more acceptable price and also for ensuring waste oil recyclers to have stable waste oil supply without being troubled by destructive competition.

In an exemplary embodiment, the present invention provides a waste oil management system, comprising: a container, for storing a waste oil; an identifying element, disposed on the container to be used for registering a data; and a control unit, configured for receiving a notice issued from a specific location so as to schedule a waste oil recycle device to the specific location for performing a waste oil collecting operation.

In another exemplary embodiment, the present invention provides a waste oil management method, comprising the steps of: basing upon a notice so as to perform a waste oil collecting operation at a specific location for collecting a waste oil containing in a container having an identifying element mounted thereon while the identifying element further has a data registered therein; accessing the data so as to perform an authentication process upon the waste oil in the container; and performing a trading process basing upon the result of the authentication process.

In further another exemplary embodiment, the present invention provides a waste oil management method, comprising the steps of: basing upon a notice so as to perform a waste oil collecting operation at a specific location for collecting a waste oil containing in a container; performing an authentication process upon the waste oil in the container; attaching an identifying element containing information relating to the characters of the waste oil resulting from the authentication process on the container; and performing a trading process basing upon the result of the authentication process.

In further another exemplary embodiment, the present invention provides a waste oil management method, comprising the steps of: purchasing a fresh oil product by a price; selling the fresh oil product at a specific discounted price; basing upon a notice so as to perform a waste oil collecting operation at a specific location for collecting a waste oil containing in a container, whereas the waste oil is the used fresh oil product that was sold at the specific discounted price; performing an authentication process upon the waste oil in the container; attaching an identifying element containing information relating to the characters of the waste oil on the container; and performing a trading process basing upon the result of the authentication process.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:

FIG. 1 is a schematic diagram showing a waste oil management system according to an embodiment of the invention.

FIG. 2A is a schematic view of a container used in the waste oil management system of the invention.

FIG. 2B and FIG. 2C are schematic views of another two containers used in the waste oil management system of the invention.

FIG. 2D is a block diagram showing a wireless communication module used in the waste oil management system of the invention.

FIG. 2E is a block diagram showing another wireless communication module used in the waste oil management system of the invention.

FIG. 3 is a flow chart depicting the steps of a waste oil management method according to a first embodiment of the invention.

FIG. 4 is a schematic diagram showing how the data registered in the container of the present invention is being accessed.

FIG. 5 is a flow chart depicting the steps of an authentication process performed in a waste oil management method of the invention.

FIG. 6 is a flow chart depicting the steps of a waste oil management method according to a second embodiment of the invention.

FIG. 7 is a flow chart depicting the steps of a waste oil management method according to a third embodiment of the invention.

### DESCRIPTION OF THE EXEMPLARY EMBODIMENTS

For your esteemed members of reviewing committee to further understand and recognize the fulfilled functions and structural characteristics of the invention, several exemplary embodiments cooperating with detailed description are presented as the follows.

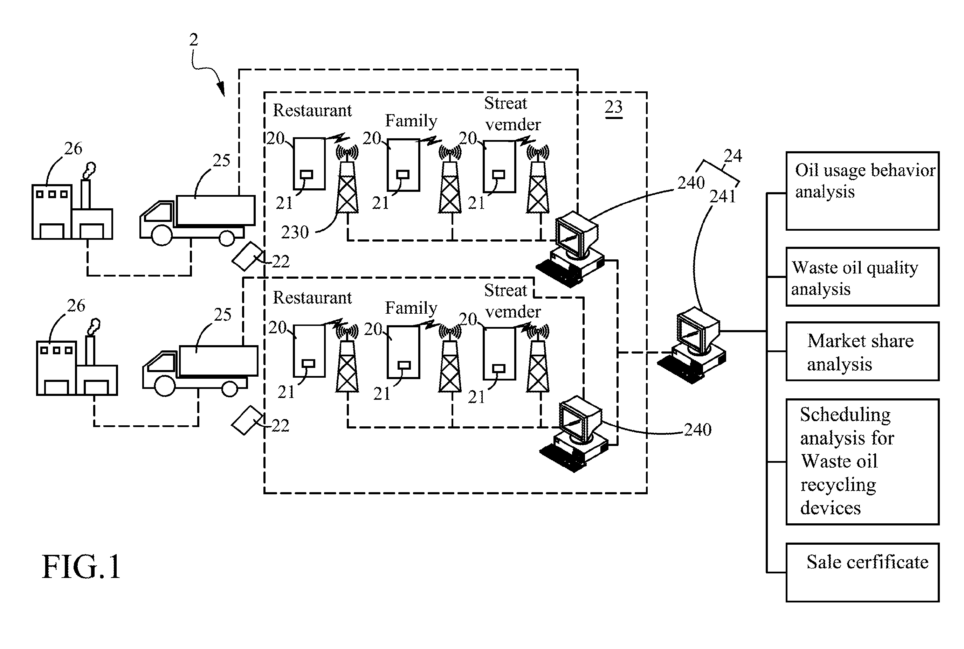

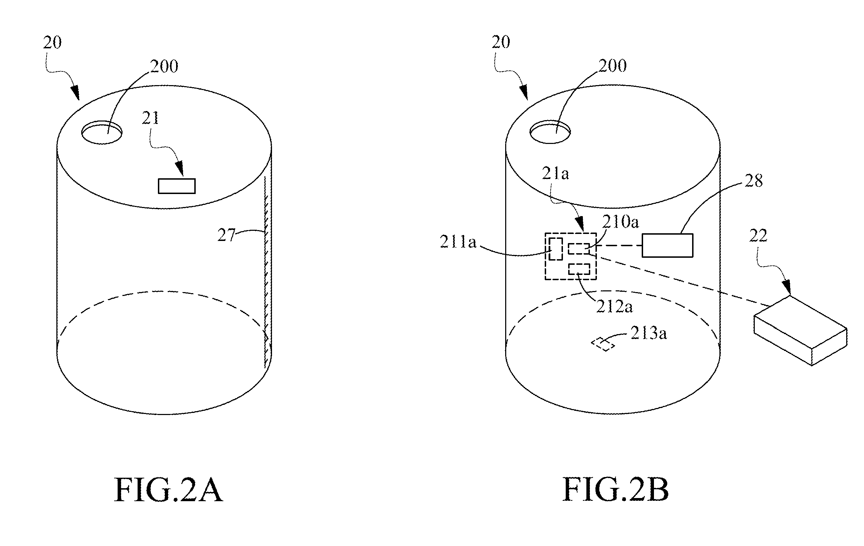

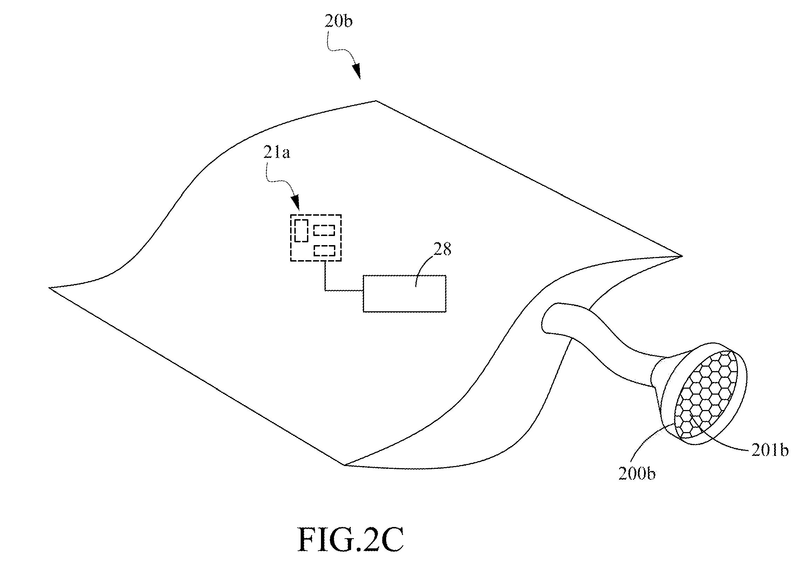

Please refer to FIG. 1, which is a schematic diagram showing a waste oil management system according to an embodiment of the invention. In this embodiment, the waste oil management system comprises at least one container 20, which can be disposed at any common family, street vender, restaurant or automobile/motorcycle maintenance facility, but is not limited thereby. It is noted that each container 20 is provided for storing a waste oil, whereas the type of waste oil being stored is mostly dependent upon where the container 20 is located. For instance, if a container 20 is placed in a common family, a street vender or even a restaurant, it is used for storing used cooking oil and oil oozed from kitchen waste; on the other hand, if a container 20 is disposed in a motorcycle maintenance facility, it is used for storing waste machine oil. In addition, the container 20 can be a metallic container or a non-metallic container, as the barrel-like containers shown in FIG. 2A and FIG. 2B, or it can be a bag-like container made of plastic, as the one shown in FIG. 2C. Moreover, there can be a display unit 27 being fitted on the container for displaying information relating to the waste oil being stored inside the container with respect to its weight and volume.

In FIG. 2A, the container 20 is a barrel-like container, which is formed with an opening 200 for waste oil to be fed into the container 20 therefrom. In an embodiment of the invention, there can be a filter mounted on the opening 200 for filtering out impurities in the waste oil. Moreover, there is further an identifying element 21 attached on the container 20, which is provided for registering information relating to waste oil quality and also identity information of the container 20, including: container registration number, location of the container, waste oil provider telephone number, company/individual name, trading history, and so on. It is noted that the identifying element 21 is either designed to record the status of the waste oil contained in the container in a real-time manner, or can be produced after the quality of the waste oil contained in the container is being inspected as a tag containing the result of the inspection, but is not limited thereby. In this embodiment, the identifying element 21 can be a wireless communication module, such as a radio-frequency identification (RFID) tag, a GPRS module a WIMAX module, a 3G module, a 3.5G module, a 1D/2D bar code, etc, or it can be a hand writing recognition tag, but is not limited thereby. In this embodiment, the identifying element 21 is a bar code that can be accessed by a bar code reader. Moreover, there is a display unit 27 disposed at a side of the container 20, which is provided for displaying information relating to the waste oil stored in the container 20, such as the weight and volume of the waste oil. In this embodiment, the display unit 27 is substantially a scale.

The container 20 shown in FIG. 2B is basically the same as the one shown in FIG. 2A, but is different in that: the identifying element 21a in FIG. 2B is a wireless communication module. The wireless communication module 21a, which has information relating to waste oil quality and identity of the container registered therein, is capable of issuing a RF signal to a specific location through a wireless or wired communication network, whereas the communication network can be RFID communication network, WLAN, WIMAX, GPS, GPRS, 3G, or 3.5G networks. In addition, the wireless communication module 21a is configured to communicate with a read/write device 22, by that the information registered in the wireless communication module 21a can be transmitted the read/write device 22 or the read/write device 22 is able to modify the registered information. It is noted that the read/write device 22 can be embedded inside a cellular phone, a PDA a notebook computer or a desktop computer, but is not limited thereby. Moreover, when the identifying element is a bar code, the read/write device 22 is a bar code reader. As shown in FIG. 1, the container 20 is located inside an area 23 under the coverage of a wireless network composed of a plurality of wireless access points 230, which can be WIMAX access points, GPS access points, GPRS access points 3G access points, or 3.5G access points, but are not limited thereby. It is noted that each access point 230 is electrically connected to a control unit 24 disposed inside the area 23 in a wireless or wired manner.

The control unit 24 is a device with calculation ability, such as a computer, a work station, or a server, but is not limited thereby. As shown in FIG. 1, the control unit 24 for the areas 23 is comprised of at least one local server 240 and a center control apparatus 241, in which the at least one local server 240 is disposed inside the area 23 at a specific location, such as local service station or local service center, and the center control apparatus 241 is disposed inside a control center while being electrically connected to the at least one local server 240 for collecting and compiling information from all local servers 240 in the area 23. It is noted that each local server 240 can be arranged inside one administrative region of the area 23, or can be arranged inside one sub-region whereas there can be a plurality of sub-regions in the area 23 that is divided according to the total volume of waste oil available in the area 23. In another embodiment, the control unit 24 can simply be a control apparatus capable of functioning as the integration of the local server 240 and the center control apparatus 241, which is designed to receive and compile the signals directly issued from all the containers 20 in the area 23. Moreover, the control unit 24 can be a telephone management system, which inform an operator is schedule a waste oil collection operation in response to a telephone notice directly from a user. Thus, there can be a variety of control unit 24, which can be selected in the present invention according to actual requirement.

As shown in FIG. 2B, the wireless communication module 21a is an assembly of a RFID tag 210a, a GPS module 211a and two sensors 212a, 213a, in which the RFID tag 210a can be an active RFID tag or a passive RFID tag; the GPS module 211a is used for providing information relating to the location of the container 20; and the sensors 212a, 213a are used for detecting the characters of the waste oil stored in the container 20 so as to provide information relating to the quality and volume of the waste oil. It is noted that any one of the two sensors 212a, 213a can be a water content sensor, a weight sensor, a volume sensor, an acid value sensor, a iodine value sensor, a level sensor, a peroxide value sensor, or the combination thereof, but is not limited thereby. The two sensors 212a, 213a can be arranged at positions on the container 20 at will, and in this embodiment, the two sensors 212a, 213a are arranged respectively at a side and bottom of the container 20. In addition, the detection result of the two sensors 212a, 213a are recorded in the RFID tag 210a, whereas the RFID tag further has information relating to the identity of the container 20 registered therein, such as container registration number, location of the container, information of the waste oil provider including: telephone number, address and name, information relating to the container itself including: volume, weight and producer, trading history including the date of last being recycled, and so on, but is not limited thereby. In addition, the wireless communication module 21a is further coupled to a display unit 28, which can be a electronic display device, such as a LED display device or a LCD display device, and is used for display information relating to the weight and quality of waste oil and also identity information of the container.

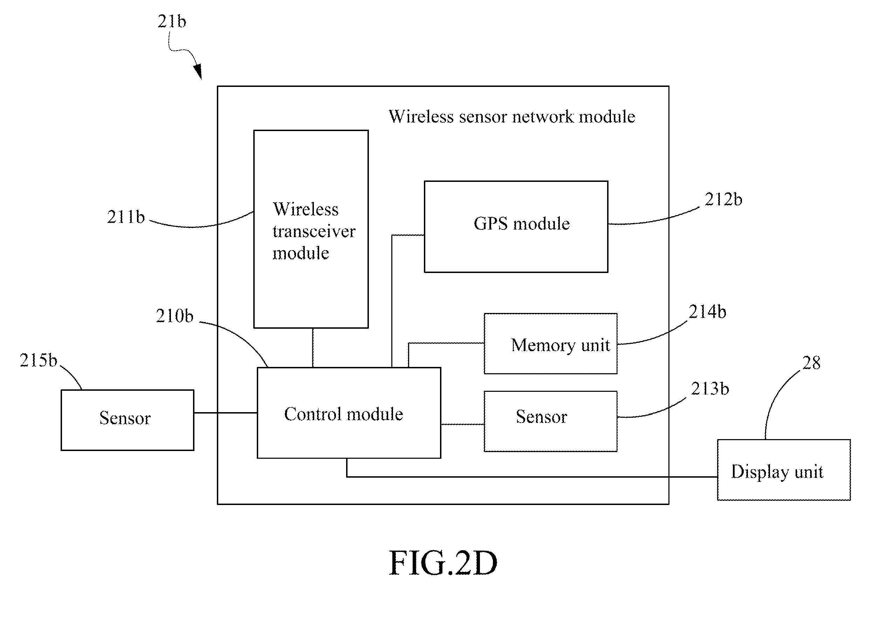

Please refer to FIG. 2D, which is a block diagram showing another wireless communication module used in the waste oil management system of the invention. In FIG. 2D, the wireless communication module, being a wireless sensor network module 21b, is substantially an assembly of a control module 21b, a wireless transceiver module 211b, a GPS module 212b, a sensor 213b and a memory unit 241b. The control module 210b, being the operation center of the whole wireless sensor network module 21b, is electrically connected to all the other units in the wireless sensor network module 21b, and moreover, the control module 21b is further electrically connected to another sensor 215b arranged on the container, by that the signals form all the sensors 213b and 215b can be received by the control module 210b so as to be stored in the memory unit 214b or to be transmitted through the wireless transceiver module 211b. It is noted that the memory unit 214b can be a RFID memory or a hard drive. Similarly, any one of the sensors 213b and 215b can be a weight sensor, a volume sensor, an acid value sensor, an iodine value sensor, a level sensor, a peroxide value sensor, or the combination thereof, but is not limited thereby. The memory unit 214b is used not only for storing the detection results of the sensors 213b and 215b, but also it has information relating to the identity of the container registered therein, which include: container registration number, location of the container, information of the waste oil provider including: telephone number, address and name, information relating to the container itself including: volume, weight and producer, trading history including the date of last being recycled, and so on, but is not limited thereby.

Accordingly, the data stored in the memory unit 214b is transmitted by the wireless transceiver module 211b through a wireless network to a corresponding local server and then to the center control apparatus. In addition, the control module 210b is further electrically coupled to a display unit 28 for enabling the same to display information relating to the container and the waste oil stored therein. As shown in FIG. 2C, except for the barrel-like structure, the container can be shaped like a bag 20b. Similarly, the bad-like container 20b is comprised of: an opening 200b; a filter 201, mounted on the opening 200b; a wireless network module 21a; and a display unit 28 connected to the wireless network module 21a. Moreover, there should be sensors being disposed inside the bag 20b for detection the status of the waste oil stored therein with respect to its weight and volume.

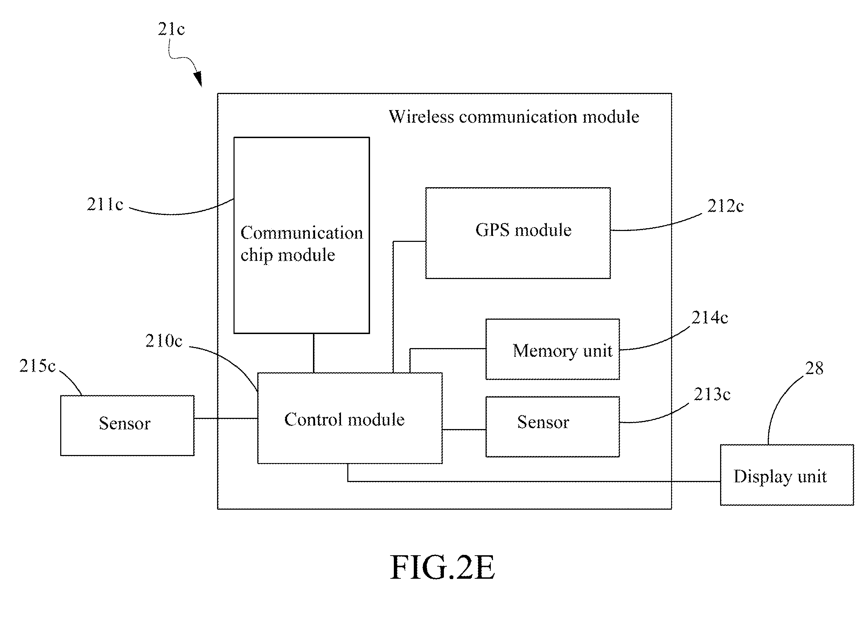

Please refer to FIG. 2E, which is a block diagram showing another wireless communication module used in the waste oil management system of the invention. In FIG. 2E, the wireless communication module 21c is an assembly of a control module 210c, a communication chip module 211c, a GPS module 212c, a sensor 213c and a memory unit 214c. The control module 210c, being the operation center of the whole wireless communication module 21c, is electrically connected to all the other units in the wireless communication module 21c. It is noted that the components of the wireless communication module 21c shown in this embodiment are structured basically the same as those shown in FIG. 2D, but are different in that: the communication chip module 211c can be a device selected from the group consisting of: a GPRS module, a WIMAX module, a 3G module and a 3.5G module. Operationally, when the sensor 213c signals that a specific threshold had been reached, e.g. the sensor 213c, being a weight sensor, detects the volume of the waste oil stored in the container had reach a specific amount, the control module 210c will be triggered for enabling the communication chip module 211c to issue a container-full signal to the local server through the communication network. Thereafter, as soon as the container-full signal is received by the local server, it will schedule a personnel to the specific location where the container is located for recycling the waste oil in the container. Similarly, the memory unit 214 is used not only for storing the detection results of the sensors 213c and 215c, but also it has information relating to the identity of the container registered therein, which include: container registration number, location of the container, information of the waste oil provider including: telephone number, address and name, information relating to the container itself including: volume, weight and producer, trading history including the date of last being recycled, and so on.

If the sensor used in the embodiment of FIG. 2B is a weight sensor, the weight of the waste oil stored in the container can be detected, and when the sensor detects and determines that the amount of the waste oil stored in the container had already exceeded 80% of the container's capacity, the wireless communication module will be enabled to issue a notice signal to the control unit 24 through the transmission of a communication network, such as WLAN, WIMAX, GPS, GPRS, 3G, or 3.5G networks. It is noted that except for the weight sensor, the amount of waste oil in the container can also be detected and determined by the use of a level sensor. As the control unit 24 shown in FIG. 1 is comprised of at least one local server 240 and a center control apparatus 241, the at least one local server 240 is designed to perform a personnel scheduling operation for waste oil recycling while transmitting information relating to the scheduling and the recycling back to the center control apparatus 241. That is, when the notice signal is received by the local server 240, the local server 240 will schedule a waste oil recycle device 25, e.g. an oil tank truck, to a location where the container is located for collecting waste oil. Moreover, in addition to the notice signal that is being generated automatically, each waste oil provider, who is located in the neighborhood of the container and utilizes the container for storing its waste oil, is able to issue an application for requesting its waste oil to be scheduled for collection and recycle by e-mail, telephone, or even by logging into the local server 240 through a terminal device, but is not limited thereby. The local server 240 also will schedule a waste oil collection for dispatching waste oil recycle device 25 for collecting waste oil in response to each and every waste oil collection application.

On the other hand, the center control apparatus is functioning to collect and compile data transmitted from local servers at different locations whereas the data includes the waste oil information of each container relating to weight, volume, water content, acid value, iodine value, etc., and also information relating to location of the container and the waste oil provider for each container. Thereafter, the center control apparatus will proceed to perform a data analysis operation basing upon those received information, whereas the data analysis operation includes: oil usage behavior analysis with respect to the identities of waste oil providers, waste oil quality analysis, market share analysis, scheduling analysis for waste oil recycling devices, sale certificate analysis, and scheduling analysis for waste oil refining. Clearly, the analysis relating to the identity of waste oil provider can provide information to the waste oil recycler for enabling the same to know where to collect the waste oil as well as the waste oil provider's phone number, address, trading record and so on; and the oil usage behavior analysis can provide information relating to oil usage behavior of the waste oil provider with respect to how hot the oil was during usage and how long a pot of oil was used consistently before being replaced and discarded to the waste oil recycler for facilitating the same to perform a waste oil management operation; and according to data from the waste oil quality analysis, the waste oil recycler is able to separate and store the recycled waste oil in different containers according to its water content, acid value, iodine vale, and peroxide value, etc., so that as each batch of container containing waste oils of similar quality is processed by a refinery procedure specific designed therefor, not only the quality of the resulting recycled oil can be enhanced but also the cost for waste oil refining is reduced.

As the waste oil sale certificate can be obtained not only by cash transaction, but also by plastic money, ATM, electronic certificate through Internet, but is not limited thereby, it is easy to register each waste oil trading. Thu, the market share analysis can analyze the record of each waste oil trading for obtaining information for forming a market share expansion strategy. The scheduling analysis is designed to analyze each waste oil collection request issued from waste oil providers by e-mail, telephone, or even by logging into the local server through a terminal device, so as to arrange a schedule for waste oil recycle devices and containers rapidly and efficiently. In addition, the center control apparatus 241 is able to arrange the refinery production line more reasonably and smoothly according to the information from those analyses. It is noted that the collected waste oil can be refined into recycled oil product such as bio-diesel, and there can be a plurality refinery factories 26 available for performing the oil refinery process in the system. Therefore, the center control apparatus 241 is designed to perform an evaluation to determine which one of those refinery factories 26 should the collected waste oil be delivered during the scheduling so as to achieve maximum production.

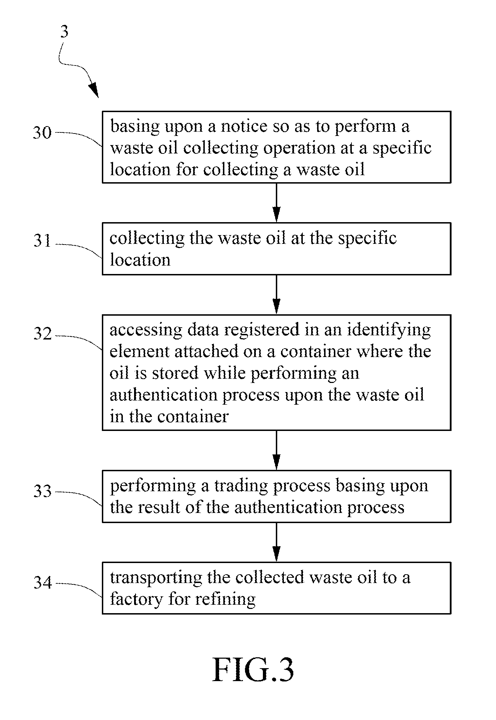

Please refer to FIG. 3, which is a flow chart depicting the steps of a waste oil management method according to a first embodiment of the invention. The waste oil management method 3 shown in FIG. 3 is performed using the system of FIG. 1, and is starts from the step 30. At step 30, a notice is issued for enabling a waste oil collecting operation to be performed at a specific location for collecting a waste oil stored in a container having an identifying element 21 attached thereat; and then the flow proceeds to step 31. In this embodiment, the identifying element 21 is an assembly of a RFID tag, a GPS module and a sensor, but is not limited thereby. Moreover, the notice can be issued in a form of a e-mail or a phone call being generated/dialed automatically or manually, or by the use of a terminal device located at the specific location for logging into the local server 240 in a wired or wireless manner, or even the notice can be a signal being generated and issued automatically from the wireless communication module on the container that is being transmitted to the local server through a network. At step 31, the waste oil collection operation is performed for collecting the waste oil at the specific location; and then the flow proceeds to step 32. It is noted that the scheduling of waste oil recycle device 25 and personnel to the specific location for collection waste oil is arranged by the local server 240 that can be performed automatically by the scheduling program embedded inside the local server 240, or can be performed manually by an operator working on the local server 240 to arrange the scheduling according to the information stored in the local server 240. Moreover the waste oil recycle device can be an oil tank truck, but is not limited thereby. As the waste oil in this embodiment is a type of used cooking oil, the specific location can be a common family, a restaurant, a fast food stop, and the like. On the other hand, if the waste oil is a type of industrial waste oil, the specific location should be a factory, an automobile maintenance store, and the like, but is not limited thereby. After the completing of the step 31, the step 32 is processed. At step 32, data registered in an identifying element 21 is accessed so as to perform an authentication process upon the waste oil in the container; and then the flow proceeds to step 33.

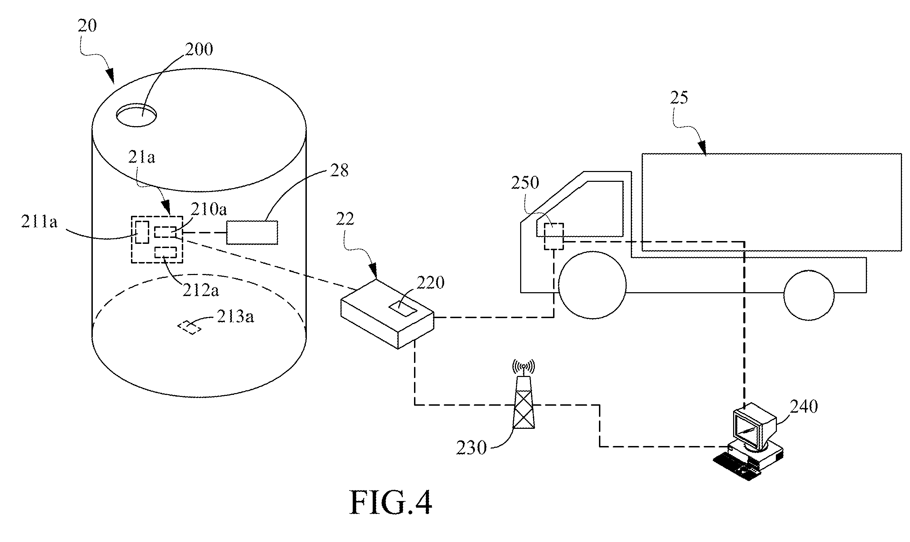

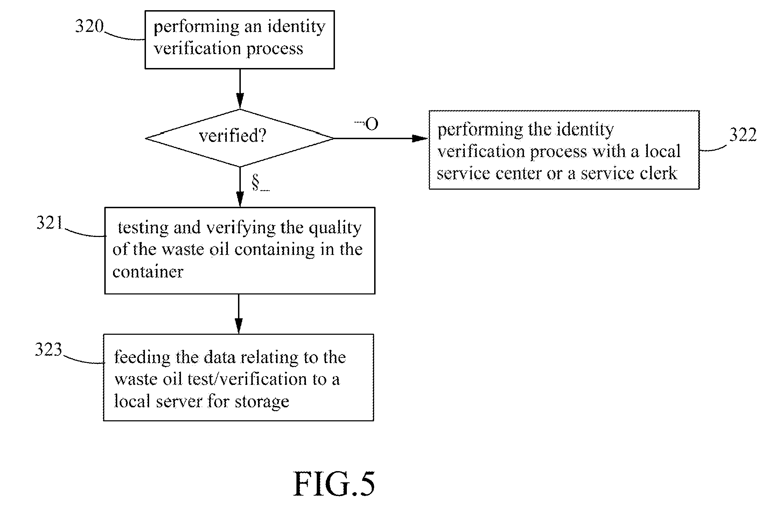

Please refer to FIG. 4, which is a schematic diagram showing how the data registered in the container of the present invention is being accessed by a read/write device. As shown in FIG. 4, the read/write device 22 is carried by a personnel in charger of waste oil collection, which is embedded with a wireless communication module 220 capable of communicating with a control computer 250 arranged in the waste oil recycle device 25. It is noted that the control computer 250 is also capable of communicating with the local server 240. In another embodiment, the read/write device 22 is designed to communicate directly with the local server 240 through a wireless access point 230. Operationally, the collection personnel is going to perform a data accessing operation upon the container 20 using the read/write device 22 as soon as he/she arrives at the location where the container 20 is disposed, and then he/she is able to perform the authentication process using the accessed data. Please refer to FIG. 5, which is a flow chart depicting the steps of an authentication process performed in a waste oil management method of the invention. In FIG. 5, the flow starts from the step 320. At step 320, an identity verification process is performed. In this embodiment, the identity verification process comprises a procedure for verifying the identity of the container and another procedure for verifying the identity of the waste oil provider as the information relating to the identity of the waste oil provider is recorded in the identifying element 21, in that the container verification procedure will verify the information relating to the container, such as the container registration number, the local server which in charge of the area where the container is located, etc., and the waste oil provider verification procedure will verify the information relating to the waste oil provider, such as the name and ID number of the waste oil provider. In addition, if the identifying element 21 is a bar code, the waste oil collection personal is able to use a bar code reader to access the bar code for obtaining information relating to the container. On the other hand, if the identifying element 21 is a handwriting tag, those information can be obtained simply by viewing the handwriting tag while registering the result of the viewing into a handheld device, such as a notebook computer, a PDA, a cellular phone or a vehicle-mounted computer, but is not limited thereby.

During the verifying of the identity of the waste oil provider, the waste oil provider is required to provide an adequate personal identification, such as an ID card or even a membership card that is applied and issued by the waste oil recycler. In this embodiment, the membership card can be a RFID card. It is noted that any user is able to apply the membership card through a local service center or a sale personnel of the waste oil recycler. After application, the waste oil recycler will provide containers to the waste oil provider for storing its waste oil while registering the information of the waste oil provider as well as the information of the containers that are provided to be used by the waste oil provider in its corresponding local server, and at the same time, reporting such registration to the center control apparatus through the communication network. Moreover, the waste oil provider is also able to apply the membership directly by logging into the local server by the use of a terminal device and issuing an application in an on-line manner, and then the local service center will send the containers and membership card to a specific location specified by the waste oil provider according to the on-line application.

If the identity is verified, then the flow proceeds to step 321 for testing and verifying the quality of the waste oil containing in the container; otherwise, the flow will proceeds to step 322 for performing the identity verification process with a local service center or a service clerk so as to update the membership information of the waste oil provider or have the waste oil provider to issue a membership application again. During the performing of the step 321, since the container has sensors disposed therein, information relating to the quality of the waste oil containing in the container can be detected in real-time and then registered in the RFID tag or the memory unit. If the sensor disposed inside the container is a weight sensor or a level sensor, the weight or the volume of the waste oil being stored inside the container can be detected so that the information relating to the amount of waste oil that is current being stored in the container can be known and registered in the RFID tag; on the other hand, if the sensor is a water content sensor, an acid value sensor, an iodine value sensor or a peroxide value sensor, the quality of the waste oil can be determined. However, the type of sensor capable of being arranged inside the container is not limited thereby. In an embodiment of the invention, if the water content is less than 0.1%, and the acid value and iodine value are all smaller than 3 mg/kg, the quality of the waste oil is determined to be "good". Nevertheless, the grading relating to the quality of waste oil is determined according to actual requirement and thus can be different according to different users. Therefore, the grading is not limited by the standard described in the aforesaid embodiment.

After the step 321 is completed, the flow proceeds to step 323. At step 323, the data relating to the waste oil test/verification is fed to a local server for storage by the use of a read/write device or a control computer embedded inside the waste oil recycle device; and the local server will further report the received data to the center control apparatus for analysis. Thereafter, the center control apparatus will base upon the data analysis, i.e. information relating the quality and amount of waste oil, to select an oil refinery factory for processing the waste oil, and then transmit the information relating to the location of the selected factory to the control computer of the waste oil recycle device or to the read/write device of the recycle personnel. Moreover, the read/write device is able to register all the information obtained from the waste oil test/verification performed in step 321 into the RFID tag of the wireless communication module to be provided for another waste oil test/verification if necessary. In another embodiment, the quality of waste oil can be detected manually by a personnel using handheld detector, and then the detection result will be issued in a form of bar code to be attached on the container, or to be accessed by a bar code reader and thus registered into the RFID tag. Nevertheless, if the identifying element of the container is a handwriting tag, the personnel can simply record the detection result simply by writing.

In FIG. 3, after the authentication process of step 32 is completed, the flow will proceed to step 33. At step 33, a trading process is performed according to the result of the authentication process; and then the flow proceeds to step 34. During the trading process, the waste oil recycler will compensate the waste oil provide properly according to the quality and volume of the collected waste oil. It is noted that there can be a variety of compensations provided by the waste oil recyclers for the waste oil providers to select. The trading can be performed in a form of cash transaction, or in a form of electronic currency that can be registered into the membership cards of the waste oil providers. The users of the membership cards are able to purchase goods from any stores, such as grocery stores, convenient stores, restaurants, or gas stations, whichever are owned by the waste oil recyclers or are contacted thereto.

Moreover, the waste oil recyclers can also compensate the waste oil providers with equal-valued livelihood goods and materials, which includes: unused oil products, (i.e. plant animal oils, fossil oil products, mineral oils, industrial oils, bio-diesel or bio-gasoline), toilet paper, rice, sugar, soap, salt, household electrical appliances, 3C electronic products, dresses and accessories, and so on, but is not limited thereby. Since the waste oil recyclers are able to purchase those livelihood goods and materials in mass quantity, it is possible that the waste oil recyclers can purchase those materials at prices lower than current market prices, so that the waste oil providers can benefit therefrom and acquire those livelihood goods and materials at bargain prices. On the other hand, a waste oil provide can simply ask its waste oil recyclers to refine its waste oil into usable oil product, and consequently, instead of refining those waste oil currently stored in the container disposed at the waste oil provide, the waste oil recycler can dispatch a waste oil recycle device carrying a container of refined oil product to the waste oil provider for exchanging the waste oil, and then simply charge the waste oil provider with a recycle/refinery fee.

In addition, after the trading between a waste oil provider, such as restaurants, fast food stops factories, automobile maintenance stores, etc., and its waste oil recycler is completed, it is most often that the waste oil provider will require to purchase fresh oil products, such as fresh cooking oil for restaurants or machinery oil for automobile maintenance stores. At this moment, the waste oil recycler had already calculate the amount of fresh oil that the waste oil provider requires to purchase basing upon the amount of waste oil that was collected therefrom, so that the waste oil recycler is able to provide instantly the exact amount of fresh oil product to the waste oil provider. It is noted that the fresh oil products can be unused oil products of plant animal oils, fossil oil products, mineral oils, industrial oils, bio-diesel or bio-gasoline, etc., or can be refined oil products of plant animal oils, fossil oil products, mineral oils, industrial oils, bio-diesel or bio-gasoline, etc.

At the trading is completed, the flow proceeds to step 34. At step 34, the collected waste oil is transported to a factory for refining. Operationally, the recycle personnel will direct the waste oil recycle device to a refinery factory designated by the center control apparatus for refining the collected waste oil into refined oil products, such as plant animal oils, fossil oil products, mineral oils, industrial oils, bio-diesel or bio-gasoline, and soaps, etc.

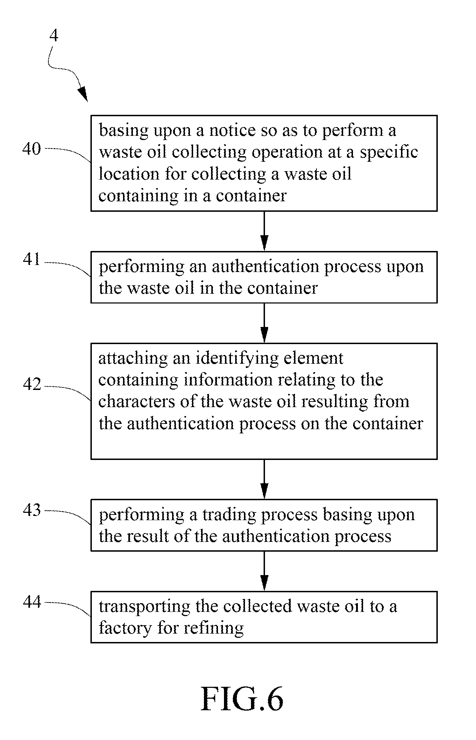

Please refer to FIG. 6, which is a flow chart depicting the steps of a waste oil management method according to a second embodiment of the invention. The flow shown in this second embodiment is basically the same as the one shown in the embodiment of FIG. 3, but is different in that: the identifying element is generated after the completion of the authentication process, and then the identifying element is attached to the container. The flow of FIG. 6 starts from the step 40. At step 40, a waste oil collecting operation is performed at a specific location basing upon a notice for collecting a waste oil containing in a container; and then the flow proceeds to step 41. At step 41, an authentication process is performed upon the waste oil in the container, which is performed using a portable detector for detecting the quality and amount of waste oil stored in the container, whereas the quality information includes the water content, acid value and iodine value, etc.; and then the flow proceeds to step 42. At step 42, an identifying element containing information relating to the characters of the waste oil resulting from the authentication process is generated and attached on the container; and then the flow proceeds to step 43. In this embodiment, the characters of the waste oil are included in the information relating to the amount and quality of the waste oil, the source of the waste oil, the identity of the container for storing the waste oil, and the combination thereof. It is noted that the identifying element can be a 1D/2D bar code, or a handwriting tag, but is not limited thereby. At step 43, a trading process is performed basing upon the result of the authentication process; and then the flow proceeds to step 44. At step 44, the collected waste oil is transported to a factory for refining. It is noted that the steps 43 and 44 are performed the same as the steps 33 and 34 described in FIG. 3, and thus are not described further herein.

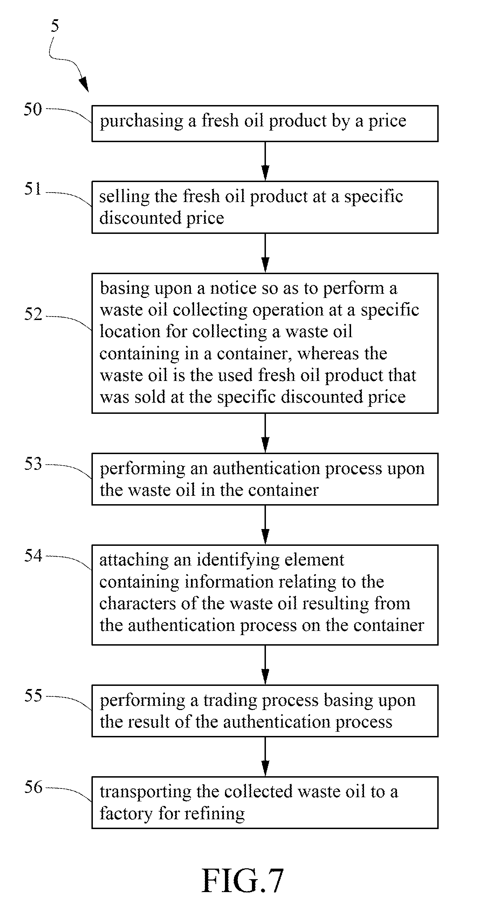

Please refer to FIG. 7, which is a flow chart depicting the steps of a waste oil management method according to a third embodiment of the invention. In FIG. 7, the waste oil management method 5 starts from the step 50. At step 50, the waste oil recycler purchases a fresh oil product at a price form an oil dealer, whereas the fresh oil product can be a cooking oil such as soybean salad oil, peanut oil, palm oil, or olive oil, but is not limited thereby; and then the flow proceeds to step 51. At step 51, the waste oil recycler sells the fresh oil product at a specific discounted price to the waste oil provider; and then the flow proceeds to step 52. It is noted that the waste oil provider here can be a common family, a night market street vender, a restaurant, a fast food stop, and the like; and the specific discounted price is a price discounted from the waste oil recycler's purchase price. For instance, if the fresh oil's purchase price of the waste oil recycler is 34 dollars per kilogram, the waste oil recycler will sell the fresh oil at a discount of 60% off the purchase price to the waste oil provider, i.e. 34 X 0.4=13.6 dollars, so that the waste oil provider can purchase the fresh oil at a discounted price. It is noted that the discount is not limited to the 60% off as described hereinbefore.

At step 52, a waste oil collecting operation at a specific location basing upon a notice for collecting a waste oil containing in a container, whereas the waste oil is the used fresh oil product that was sold at the specific discounted price to the waste oil provider; and then the flow proceeds to step 53. Operationally, the waste oil recycler will dispatch a recycle device to a specific location for collecting waste oil according to the notice. In this embodiment, since the waste oil is a type of used cooking oil, the specific location should be a common family, a street vender, a fast food stop, or a restaurant, and so on. However, if the waste oil is a type of industrial waste oil, the specific location should be a factory or an automobile maintenance store, but is not limited thereby. The proceeding of the step 52 is similar to the aforesaid step 40, and thus will not be described further herein. At step 53, an authentication process, which is similar to the step 41, is performed upon the waste oil in the container; and then the flow proceeds to step 54. Operationally, the measurement of the waste oil in weight or in volume that is performed in the authentication process can be used as basis for the following trading process, since it can be used in an evaluation for determining the different between the amount of fresh oil that was used during a specific period and the amount of waste oil being produced during the same period as the waste oil is the leftovers of the fresh oil after being used. As for the amount of fresh oil that was used during a specific period, it can be detected directly from the container used for storing the fresh oil by comparing the original amount of storage with the amount of fresh oil left after the specific period.

At step 54, an identifying element containing information relating to the characters of the waste oil resulting from the authentication process is generated and attached on the container; and then the flow proceeds to step 55. In this embodiment, the characters of the waste oil are included in the information relating to the amount and quality of the waste oil, the source of the waste oil, the identity of the container for storing the waste oil, and the combination thereof. It is noted that the identifying element can be a 1D/2D bar code, or a handwriting tag, but is not limited thereby. At step 55, a trading process is performed basing upon the result of the authentication process; and then the flow proceeds to step 56. Moreover, the present embodiment of the present invention is **characterized in that**: by providing the waste oil provider with fresh oil products at a discount price, the waste oil recycler is able to obtain waste oil unconditionally from waste oil providers. Therefore, it is importance to have a correct idea about the quality of the waste oil, as it is evaluated at step 53, so as to be used as the basis for the trading process performed in step 55. For instance, if the water content of the waste oil is above a specific standard, the waste oil recycler is in title to claim a compensation from the waste oil provider. That is, when the expense of a waste oil provider for purchasing fresh oil is 14,200 NT dollars per week, i.e. 1000 kg X 14.2 NT/kg = 14,200 NT dollars and the authentication process detected that the recycled waste oil is about 900 kg, the difference is 100 kg that is about account for the oil loss rate of 0.1 to the waste oil recycler as it originally sold 1000 kg fresh to the waste oil provider. Assuming the impurities in the collected waste oil is not exceeding a specific threshold, the waste oil provider should compensate the 0.1 oil loss which is equal to 2040 NT dollars per week, i.e. 20.4 X 1000 X 0.1 = 2040. The compensation should be calculated basing upon the difference between the purchase price of the waste oil recyclers and the discount price sold to the waste oil provider, that is 60% of the purchase price in this embodiment, i.e. 34 X 0.6 = 20.4. It is noted that the discount is not limited to the 60% off as described hereinbefore. After the trading process, the flow proceeds to step 56. At step 56, the collected waste oil is transported to a factory for refining. It is noted that the step 56 are performed the same as the step 34 described in FIG. 3, and thus is not described further herein.

By the business model described in the third embodiment of the invention, the user, i.e. the waste oil provide, is able to obtain his/her required fresh oil product at a cheap cost, so that he/she can afford to change the used oil more frequently; and if the fresh oil product is a cooking oil for frying foods, the safety of the fried foods can be ensured since the foods are fried in a pot of oil that is changed frequently without being used for a long period of time and thus oxidized. According to prior art, if the oil purchased expense of a user is 34,000 NT dollars per week, i.e. 1000 kg X 34 NT/kg = 34, 000 NT dollars, and he/she is operating at an oil loss rate of 0.2 since he/she is used to use the same pot of oil for a long period time, the waste oil produced thereby is about 800 kg per week which can be sold to a waste oil provider for about 12,800 NT dollars, i.e. 800 kg X 16 NT/kg = 12,800 NT dollars. Thus, the cost of oil usage is 21,200 NT dollars per week, i.e. 34000-12000=21000, and 84,800 NT dollars per month with a unit cost of 21.2 NT/week. kg.

On the other hand, according to the second embodiment of the present invention, if the oil purchased expense of a user is 14,200 NT dollars per week, i.e. 1000 kg X 14.2 NT/kg = 14,200 NT dollars, and he/she is all operating at an oil loss rate of 0.2 so that the waste oil provide should compensate the waste oil recycler for 4080 NT dollars per week, i.e. 20.4 X 1000 kg X 0.2 = 4080 NT dollars, the cost of oil usage for the waste oil provider should be 18,280 NT dollars per week, i.e. 4080 + 14,200 = 18,280 NT dollars, and is 73,120 NT dollars per mount with a unit cost of 18.28 NT/week. kg. Moreover, as the cheaper oil price will encourage the waste oil provide to change oil more frequently, the oil loss rate can be reduced as it is indicated in the third embodiment of the invention. Therefore, if the oil purchased expense of a user is 14,200 NT dollars per week, i.e. 1000 kg X 14.2 NT/kg = 14,200 NT dollars, and he/she is operating at an oil loss rate of 0.1 so that the waste oil provide should compensate the waste oil recycler for 2040 NT dollars per week, i.e. 20.4 X 1000 kg X 0.1 = 2040 NT dollars, the cost of oil usage for the waste oil provider should be 16,240 NT dollars per week, i.e. 2040 + 14,200 = 16,240 NT dollars, and is 64,960 NT dollars per mount with a unit cost of 16.48 NT/week. kg. Accordingly, not only the waste oil providers are able to purchase oil at an average oil purchase price of 16.48 NT/week. kg, which is far cheaper than market price, but also the waste oil recyclers can ensure to have stable waste oil supply and thus prevent the market from malignant competition. It is noted that the embodiment shown in FIG. 7 can be considered as the extension of FIG. 6, so that those skilled in the art are able to combine the steps 50 and 51 with the steps shown in FIG. 3.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

## Claims

1. A waste oil management method, comprising the steps of:
basing upon a notice so as to perform a waste oil collecting operation at a
specific location for collecting a waste oil containing in a container having an identifying element mounted thereon while the identifying element further has a data registered therein;
accessing the data so as to perform an authentication process upon the waste
oil in the container; and
performing a trading process basing upon the result of the authentication
process.

2. A waste oil management method, comprising the steps of:
basing upon a notice so as to perform a waste oil collecting operation at a
specific location for collecting a waste oil containing in a container;
performing an authentication process upon the waste oil in the container;
attaching an identifying element containing information relating to the
characters of the waste oil resulting from the authentication process on the container; and
performing a trading process basing upon the result of the authentication
process.

3. The waste oil management method of claim 1 or 2, wherein the identifying element is a wireless communication module.

4. The waste oil management method of claim 3, wherein the notice is a radio-frequency signal containing information relating to the amount of the waste oil in the container that is detected and transmitted by the wireless communication module, and the radio-frequency signal from the wireless communication module is transmitted to a control unit through a wireless network.

5. The waste oil management method of claim 3, wherein there is at least one sensor being attached on the container to be used for detecting characters of the waste oil, and each sensor is electrically connected to the wireless communication module.

6. The waste oil management method of claim 2, wherein the authentication process is performed for testing and verifying the quality of the waste oil containing in the container.

7. The waste oil management method of claim 1 or 2, further comprising the step of:
refining the waste oil obtaining from the trading process so as to obtained a recycled oil product.

8. The waste oil management method of claim 1 or 2, further comprising the following steps that are being performed before the waste oil collecting operation:
purchasing a fresh oil product by a price; and
selling the fresh oil product at a specific discounted price.

9. The waste oil management method of claim 8, wherein the waste oil being collected in the waste oil collection operation is the used fresh oil product that was sold at the specific discounted price.

10. The waste oil management method of claim 1, wherein the authentication process further comprises the steps of:
performing an identity verification process according to the data registered in the identifying element; and
testing and verifying the quality of the waste oil containing in the container.

11. A waste oil management system, comprising:
a container, for storing a waste oil;
an identifying element, disposed on the container to be used for registering a data; and
a control unit, configured for receiving a notice issued from a specific location so as to schedule a waste oil recycle device to the specific location for collecting the waste oil containing in the container.

12. The waste oil management system of claim 11, wherein the identifying element is a device selected from the group composed of: a wireless communication module, a handwriting recognition device and a bar code.

13. The waste oil management system of claim 12, wherein there is at least one sensor being attached on the container to be used for detecting characters of the waste oil, and each sensor is electrically connected to the wireless communication module.

14. The waste oil management system of claim 12, wherein the control unit is configured for performing a data analysis operation basing upon information transmitted from the wireless communication module; and the data analysis operation includes: oil usage behavior analysis with respect to the identities of waste oil providers, waste oil quality analysis, market share analysis, scheduling analysis for waste oil recycling devices, and scheduling analysis for waste oil refining.

15. The waste oil management system of claim 11, further comprising:
a read/write device, for accessing the data of the identifying element.

16. The waste oil management system of claim 11, further comprising a display unit.
